# EUROPÄISCHE PATENTSCHRIFT

(11) **EP 2 190 633 B1**
(45) Veröffentlichungstag und Bekanntmachung des Hinweises auf die Patenterteilung: **13.07.2011**
(21) Anmeldenummer: 08801188.7
(22) Anmeldetag: 19.08.2008
(51) Int. Cl.: B25J 9/10, B25J 15/02, B25J 15/08, B25J 15/10

(54) **GREIFMECHANISMUS MIT GETEILTER ANTRIEBSWELLE FÜR EINEN GREIFERFINGER**
GRIPPER MECHANISM WITH SPLIT DRIVESHAFT FOR A GRIPPER FINGER
MÉCANISME DE PRÉHENSION À ARBRE D'ENTRAÎNEMENT EN PLUSIEURS PARTIES POUR UN DOIGT DE PRÉHENSION

(30) Priorität: 21.08.2007 DE 102007039399
(43) Veröffentlichungstag der Anmeldung: 02.06.2010
(73) Patentinhaber: Saadat M. Mohsen, 59494 Soest (DE)
(72) Erfinder: SAADAT, Fereshteh, 59494 Soest (DE)
(86) Internationale Anmeldenummer: PCT/DE2008/001365
(87) Internationale Veröffentlichungsnummer: WO 2009/024138

(56) Entgegenhaltungen:
- DE-A1- 3 841 041
- DE-A1- 4 014 002
- DE-C- 316 522
- JP-A- 3 195 313
- SU-A1- 1 337 251
- US-B1- 6 244 644

## Beschreibung

Die Erfindung betrifft einen Greifmechanismus für Maschinen, Roboter und Handhabungsgeräte mit wenigstens einem beweglichen Greiferfinger, der durch mindestens eine Antriebswelle wie z.B. eine Kurbel-, Zahnrad-, Zahnriemen- oder Ket-5 tenradwelle betätigt wird, wobei die Antriebswelle mehrteilig gestaltet ist.

Ein solcher Greifmechanismen ist aus die DE-A-40- 14 002 bekannt. Greifmechanismen, deren Greiferfinger durch eine Kurbel oder ein Zahnrad in Drehbewegung versetzt werden, besitzen in der Regel eine Kurbel- oder Zahnradwelle mit beidseitigen Lagerzapfen aus einem Stück, deren Wellenenden zwecks Übertragung des Drehmomentes aus dem Getriebe herausragen und das Drehmoment mittels bekannten Welle-Nabe-Verbindungen auf andere Glieder des Greifmechanismus übertragen. Aus Gründen der Montierbarkeit besteht das Gehäuse solcher Greifmechanismen aus mehreren Teilen, die zusammengeschraubt werden. Diese sind aufwendig in der Fertigung und sie sind vor allem aufwendig in der Montage. Beim Greifen der Werkstücke läuft der Kraftfluss vom Greiferfinger über die Befestigungselemente der Gehäuseteile und versucht diese auseinander zu drücken. Weiterhin ist die Befestigung zwischen der Kurbel- oder Zahnradwelle aus einem Stück und den anderen Gliedern des Greifmechanismus zwecks Übertragung des Drehmomentes unveränderlich an einer bestimmten Position der Antriebswelle gebunden.

Die Offenlegungsschrift DE 10 2004 056 229 A1 zeigt einen Kraftspanner, der durch eine Kolben-Zylinder-Einheit (21) pneumatisch betätigt wird. Bei diesem Kraftspanner greift die Kolbenstange (3) mittels Bolzen (6) in die Nut (5) einer Kurvenscheibe (4), die an einer dreiteilig gestalteten Kurbel (4, 25, 26) befestigt ist. Die drei Teile der Kurbel (4, 25, 26) sind miteinander axial verstiftet und verschraubt. Die beidseitigen Lager der Kurbel befinden sich direkt an den Kurbelteilen (25, 26), so dass das Gehäuse zwecks Montage der Kurbel aus zwei Gussteilen (34, 35) besteht. Das Drehmoment der Kurvenscheibe wird außerhalb des Gehäuses mit klassischer Methode des Maschinenbaus über eckig gestaltete-Wellenenden auf den Arm (2) des Spanners übertragen.

Der Nachteil dieses Prinzips liegt in der Teilung des Gehäuses innerhalb des Kraftflusses und in der Kraftübertragung mittels einer Kurvenscheibe, die gehärtet und geschmiert werden muss sowie in der eckigen Gestaltung der beidseitigen Wellenenden, die auch eine relativ teuere eckige Nabe zwecks Übertragung des Drehmomentes von der Welle auf den Spannerarm erforderlich macht.

Die Gebrauchsmusterschrift DE 200 21 296 U1 beschreibt ein Handhabungsgerät bestehend aus einem Gelenkparallelogramm (1, 4, 3, 6), an dessen Koppel (4) ein nicht näher beschriebener Greifmechanismus (5) auf einer Kreisbahn geführt wird.

Zwei Lenker (1, 3) des Gelenkparallelogramms werden in Form einer Riemenradwelle (9, 10) oder einer Zahnradwelle (27, 28) im Gestell (6) gelagert und mit Hilfe eines Zahnriemens (8) oder eines Zahnrades (29) synchron angetrieben. Dadurch kann sich der Arm (4) des Handhabungsgerätes mit seinem Greifmechanismus (5) von der einen Seite durch die Deck- und Strecklage des Gelenkparallelogramms auf die andere Seite bewegen, ohne die Orientierung des Werkstückes zu verlieren oder sich in die antiparallele Lage zu begeben.

Die Offenlegungsschrift DE 40 14 002 A1 zeigt einen Greifmechanismus mit zwei jeweils als Koppel eines Gelenkparallelogramms geführten Greiferfingem (20), die mittels einer Zahnstange (11) und eines Zahnradsegmentes (13) durch zwei Seilzüge (9, 10) betätigt werden. Das Zahnradsegment (13) überträgt sein Drehmoment mittels Gewindebolzen (14), Scheiben (44) und Schrauben (45) auf eines der beiden Lenker (16) des Gelenkparallelogramms. Das Gehäuse dieses Greifmechanismus besteht aus zwei Hälften (3), die durch die angetriebenen Lenker (16) des Gelenkparallelogramms zusammengehalten werden.

Demgegenüber liegt der Erfindung die Aufgabe zugrunde, das Gehäuse mit seinen Kräften und Momenten übertragenen Teilen biege- und torsionssteif sowie montage- und kostengünstig aus einem Stück zu gestalten und darüber hinaus die Verbindung zwischen dem antreibenden Glied, Kurbel, Zahnrad, Ketten- oder Riemenrad und dem angetriebenen Glied des Greifmechanismus einfach, sicher und im Verdrehwinkel steif und variabel zu gestalten, um eine möglicht breite Anwendung desselben Greifmechanismus zu ermöglichen.

Diese Aufgabe wird erfindungsgemäß mit den in Anspruch 1 angegebenen Merkmalen gelöst.

Die Unteransprüche stellen vorteilhafte Weiterbildungen der Erfindung dar.

Aufgrund der Teilung der Antriebswelle oder Drehachse in mehreren, mindestens zwei, getrennten Teilabschnitten, von denen die zwei äußeren Teile je ein Lager beinhalten, wird die Montage der Antriebswelle oder der Drehachse mit den daran befindlichen Greifergliedern ohne Teilung des Gehäuses ermöglicht. Vorzugsweise wird die Antriebswelle in drei Teilabschnitten zerlegt, ein angetriebener Mittelteil als Kurbel oder Zahn-, Ketten- oder Riemenrad mit beidseitiger axialer Verzahnung sowie mit oder ohne Axiallagerflächen für eine Trag-Stützlagerung in X-Anordnung und zwei getrennte Lagerzapfen als Halslager in separaten Teilen des Greifmechanismus mit axialer Verzahnung sowie mit oder ohne Axiallagerflächen alternativ für eine Trag-Stütz-Lagerung der Antriebswelle in O-Anordnung.

Die axiale Verzahnung der Teile, die vorzugsweise als Triebstockverzahnung mittels Bohrungen und Stiften ausgeführt werden kann, sorgt für die formschlüssige Verbindung und Zentrierung der Teile relativ zu einander und für die torsionssteife und trotzdem im Verdrehwinkel variable Übertragung des Drehmomentes von einem Teil zum anderen Teil der Antriebswelle.

Die beidseitigen Lagerzapfen der Antriebswelle können auch axiale Durchgangsbohrungen aufweisen, die zum Durchgang der Stifte von den Bohrungen des mittleren Teils der Antriebswelle bis in die Bohrungen des angetriebenen Greiferfingers oder des Lenkers dienen, der den Greiferfinger antreibt. Somit kann die Antriebswelle aus zwei Teilen, (ein mittlerer Antriebsteil zusammen mit einem Lagerzapfen und ein einseitiger Greiferfinger zusammen mit einem Halslager), oder aus bis zu fünf Teilen, (eine erste Greiferfingerhälfte, ein erster Lagerzapfen, ein mittlerer Antriebsteil, ein zweiter Lagerzapfen und eine zweite Greiferfingerhälfte), bestehen, die alle durch axiale Verstiftung, vorzugsweise durchgehend mit langen Stiften miteinander verbunden werden. Die Verbindung der Teile der mehrteiligen Antriebswelle bzw der mehrteiligen Drehachse miteinander kann auch reibschlüssig durch kegelförmig ausgeführte Welle-Nabe-Verbindungen erfolgen. Der Vorteil einer reibschlüssigen Verbindung liegt zum einen darin, dass die Teile relativ zueinander stufenlos verbunden werden können, und zum anderen reagiert diese Verbindung bei ungewolltem Zusammenstoß während des Einsatzes als eine Art Rutschkupplung und schützt die Teile vor Bruch.

In einfachster Ausführung besitzt ein erfindungsgemäßer Greifmechanismus einen einseitig oder beidseitig an die mehrteilig gestaltete Antriebswelle, Kurbel-, Zahnrad, Riemenrad- oder Kettenradwelle, angebrachten beweglichen Greiferfinger, der als Spannvorrichtung gegen einen feststehenden Greifer- oder Maschinenteil arbeitet. Besitzt der Greifmechanismus einen einseitig an die Antriebswelle angebrachten Greiferfinger, so befindet sich mindestens das eine Halslager mit oder ohne Axiallagerfläche an diesem Greiferfinger. Das zweite Halslager bildet ein frei laufendes einfaches Drehteil als Widerlager mit axialer Verzahnung, mit oder ohne Axiallagerfläche. Beide Halslager, Fingerlager und Widerlager, haben eine gemeinsame Achse und bilden die Drehachse der Antriebswelle.

Besitzt der Greifmechanismus einen beidseitig an die Antriebswelle angebrachten Greiferfinger, so sind die beiden Radiallager mit stirnseitiger axialer Verzahnung, mit oder ohne Axiallagerfläche, als Halslager in den beiden Fingerhälften oder in angetriebenen Lenkerteilen untergebracht, die den Greiferfinger antreiben.

Das Gehäuse eines derart konzipierten Greifmechanismus kann aus dem Vollen gefertigt oder aus einem Stück gegossen werden. Es besitzt zwei miteinander verbundene Hohlräume für die Aufnahme der Betätigungseinheit wie z.B. Kolben und Kolbenstange für die pneumatische Betätigung einerseits und für die Aufnahme der Antriebswelle bei einer verzahnten Welle oder der gesamten Getriebeeinheit bei Gelenkgetrieben, andererseits. Nach der Montage der Betätigungseinheit und der Einführung der Getriebeeinheit ohne Halslager in die dafür vorgesehenen Hohlräume werden die Hohlräume mit entsprechenden Deckeln und Befestigungselementen oder Stopfen geschlossen. Zum Schluss werden von außen die Greiferfinger oder die angetriebenen Lenkerteile mit den darin befindlichen Halslagern beidseitig oder einseitig mit Widerlagern auf der anderen Seite in die Bohrungen des Gehäuses eingesteckt und axial mit dem anderen Teil oder anderen Teilen der Antriebswelle befestigt. Erst jetzt ist die Antriebswelle und mit ihr die Getriebeeinheit vollständig gelagert. Der Getrieberaum wird mit einem Deckel oder einem Stopfen hermetisch abgeschlossen. Bei einseitigem Greiferfinger bildet ein freilaufendes Gegenlager als Widerlager den zweiten Lagerzapfen der Antriebswelle. Durch die Teilung der axialen Verzahnung oder Bohrungen und Stifte der Halslager und des mittleren Teils der Antriebswelle lassen sich die Stellung der Greiferfinger und die der angetriebenen Lenker relativ zur Antriebseinheit unterschiedlich positionieren. Somit erreicht man eine variable Öffnungs- und Schließposition der Greiferfinger.

Bei Verwendung von Radialgleitlagern mit Lagerbund als Axiallager werden die Stirnseiten des mittleren Teils der Antriebswelle als Axiallager für eine Trag-Stütz-Lagerung der X-Anordnung gestaltet. Sie stützen sich gegen den von Innen in das Gehäuse eingesetzten Lagerbund des Gleitlagers ab. Bei der O-Anordnung der axialen Trag-Stütz-Lagerung der Antriebswelle oder der Drehachse liegen ihre Axiallagerflächen an den außen liegenden Stirnseiten der beidseitigen Lagerzapfen der Hals- und Widerlager. Bei der einseitigen Fingeranordnung wird das gesamte Drehmoment der Antriebswelle einseitig auf den Greiferfinger übertragen. Das Widerlager dreht sich frei von Torsionsmomenten.

Bei Anwendungen, die einen breiteren Backen benötigen, wird anstelle des Widerlagers eine zweite Greiferfingerhälfte oder Lenkerhälfte spiegelbildlich zur ersten an die inneren Teile der Antriebswelle angesetzt und außerhalb des Greifergehäuses mit einem Zwischenstück als Backenträger oder drehgelenkig mit dem Greiferfinger befestigt. Beide Finger- oder Lenkerteile zusammen mit dem Backenträger oder Greiferfinger auf der einen Seite und der mittlere Teil oder Teile der Antriebswelle oder der Drehachse auf der anderen Seite ergeben einen in sich geschlossenen biege- und torsionssteifen Greiferfinger oder Fingermechanismus. Die Antriebswelle wird in diesem Fall beidseitig symmetrisch belastet. Die Torsionsspannung halbiert sich für jede Seite.

Für staubige Räume und für Explosion geschützte Anwendungen werden am Ende der Hals- und Widerlager außerhalb der Lagerflächen, jedoch unterhalb des Greiferfingers oder des Lenkers und des Kopfes vom Widerlager, flache Axialdichtungen eingesetzt.

In allen Fällen können die Positionen der Greiferfinger oder der angetriebenen Lenker als Abtriebsglied relativ zum mittleren Teil der Antriebswelle als Antriebsglied im Rahmen der stirnseitigen Zahnteilung bzw. der Teilung der Stiftbohrungen beliebig verändert werden, um den Greifbereich einzelner Greiferfinger dem Anwendungsfall anzupassen.

Bei einem Greifmechanismus mit zwei oder mehr beweglichen Greiferfingern existieren entsprechende Anzahl der erfindungsgemäßen mehrteiligen Antriebswellen und/oder Drehachsen, die konzentrisch um die Betätigungseinheit platziert sind, um mit einem einzigen Antrieb zwangläufig synchron betätigt zu werden.

Eine weitere vorteilhafte Ausgestaltung der Erfindung sieht Greifmechanismen mit je zwei angetriebenen Antriebswellen pro beweglichen Greiferfinger vor.

Die mit den mehrteiligen Antriebswellen einseitig oder beidseitig befestigten Greiferglieder, auch Lenker genannt, mit den Halslagern führen an ihren freien Enden den Greiferfinger als Koppel eines Gelenkgetriebes. Während der erste mit der ersten Antriebswelle verbundene Lenker drehgelenkig mit dem Greiferfinger verbunden ist, ist der zweite mit der zweiten Antriebswelle verbundene Lenker durch eine Kulisse oder mittels eines kleineren Lenkers, ein binäres Glied, drehgelenkig mit dem Greifefinger verbunden.

Die Kulisse kann sich im Greiferfinger oder in dem Lenker befinden, der mit der Antriebswelle verbunden ist. Sie kann beliebige Bahnformen annehmen, um den Greiferfinger während seiner Bewegung zusätzlich in gewissen Grenzen zu schwenken.

Ein derartig mit zwei synchron angetriebenen Wellen pro Greiferfinger konzipierter Greifmechanismus führt den Greiferfinger als Koppel eines mehrgliedrigen Gelenkgetriebes auch durch und über die Streck- und Decklage des Greiferfingers mit den angetriebenen Lenkern sicher und eindeutig weiter, ohne zu kippen oder zu klemmen. Dadurch lässt sich einen Bewegungsbereich realisieren, der weit über die üblichen 90° Drehung pro Greiferfinger liegen kann.

Die Greiferfinger können somit selbst bei paralleler Bewegung aus dem Raum vor dem Greiferkörper über 180° nach hinten schwenken und den Raum vor dem Greifer für andere Aufgaben frei geben. Bei paralleler Fingerbewegung, wenn beide Lenker, die den Greiferfinger führen, gleich lang und parallel zueinander stehen, kann auf die Kulissenführung ganz verzichtet werden. In diesem Fall führt der zweite Lenker angetrieben durch die zweite Antriebswelle den Greiferfinger ebenfalls durch ein einfaches Drehgelenk. Muss das Gelenkviereck, bestehend aus dem Greiferfinger, Verbindungsstück der beiden Antriebswellen sowie den beiden durch die Antriebswellen angetriebenen Lenkern nicht durch seine Streck- und Decklage hindurch gehen, so kann auf eine der beiden Antriebswellen verzichtet und diese kann durch eine mitlaufende Drehachse ersetzt werden.

Im Einzelnen zeigen:
- Fig. 1: den Längsschnitt durch das Gehäuse des erfindungsgemäßen Greifme- chanismus mit zwei pneumatisch angetriebenen mehrteilig gestalteten Antriebswellen.
- Fig. 2: den Querschnitt durch eine dreiteilige Kurbelwelle als Antriebswelle eines erfindungsgemäßen Greifmechanismus mit einseitiger Fingeranordnung.
- Fig. 3: den Längsschnitt durch das Gehäuse eines erfindungsgemäßen Greifme- chanismus mit einer mindestens zweiteilig gestalteten Zahnrad- bzw. Rit- zelwelle als Antriebswelle und einer Zahnstange verbunden mit einer Zy- linder-Kolben-Einheit als Antriebseinheit.
- Fig. 4: den Querschnitt durch eine dreiteilige Kurbelwelle als Antriebswelle eines erfindungsgemäßen Greifmechanismus mit beidseitiger Fingeranordnung und einem Backenträger als Verbindungsstück der beiden Fingerhälften.
- Fig. 5: die Vorderansicht in den Getrieberaum eines erfindungsgemäßen Greif- mechanismus mit vier dreiteilig gestalteten Antriebswellen für vier beidsei- tig angeordneten Greiferfinger.
- Fig. 6: einen Längsschnitt durch einen erfindungsgemäßen Greifmechanismus mit je zwei mehrteilig gestalteten Kurbelwellen als Antriebswellen pro Greiferfinger.
- Fig. 7: einen Längsschnitt durch einen erfindungsgemäßen Greifmechanismus mit je zwei mehrteilig gestalteten Zahnradwellen als Antriebswellen pro Greiferfinger.

Identische Teile haben die gleiche Ziffer oder den gleichen Buchstaben. Indizes kennzeichnen verschiedene Bereiche, unterschiedliche Ausführungen oder mehrfache Anordnung desselben Elementes.

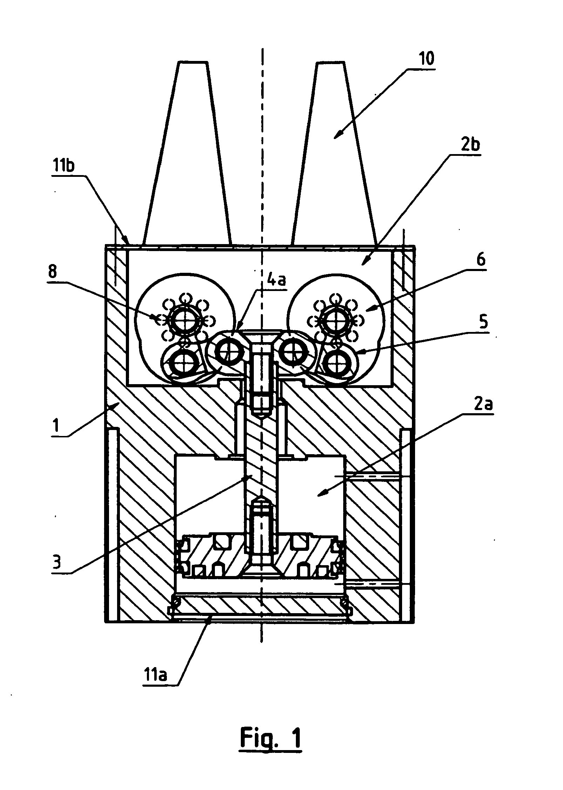

Gemäß Fig. 1 besitzt der Greifmechanismus ein Gehäuse (1) mit zwei koaxialen Hohlräumen (2a, 2b). Im zylindrischen Hohlraum (2a) ist eine Kolben-Stangen-Einheit (3) als Betätigungseinheit untergebracht und mit dem Deckel (11a) abgedichtet. Im Getrieberaum (2b) ist die Getriebeeinheit, bestehend aus mindestens einem Schubkurbelgetriebe oder mindestens einem Zahnrad-Zahnstangen-Einheit oder einer Schnecke-Schneckenrad-Einheit, untergebracht. Die Kolbenstange treibt mittels Schieber (4a) und Koppelglied (5) den mittleren Teil der dreiteilig gestalteten Antriebswelle (6) als Kurbelwelle an. Das Drehmoment wird vom mittleren Teil der Antriebswelle (6), die Kurbel, über die stirnseitige Verzahnung mittels Bohrungen und Stiften (8) auf den Greiferfinger (10) überträgt. Der mittlere Teil der Antriebswelle (6) besitzt beidseitig zwei plane Flächen mit den Bohrungen für die Stifte (8) und kann somit durch die einseitige Öffnung des Greifergehäuses in den Getrieberaum (2b) eingeführt werden. Teile dieser planen Flächen können als Axiallager der Antriebswelle (6) dienen. Der Getrieberaum (2b) kann auch eine einfache Bohrung sein, in der sich eine verzahnte Welle als Antriebswelle (6) befindet, die durch eine verzahnte Kolbenstange angetrieben wird.

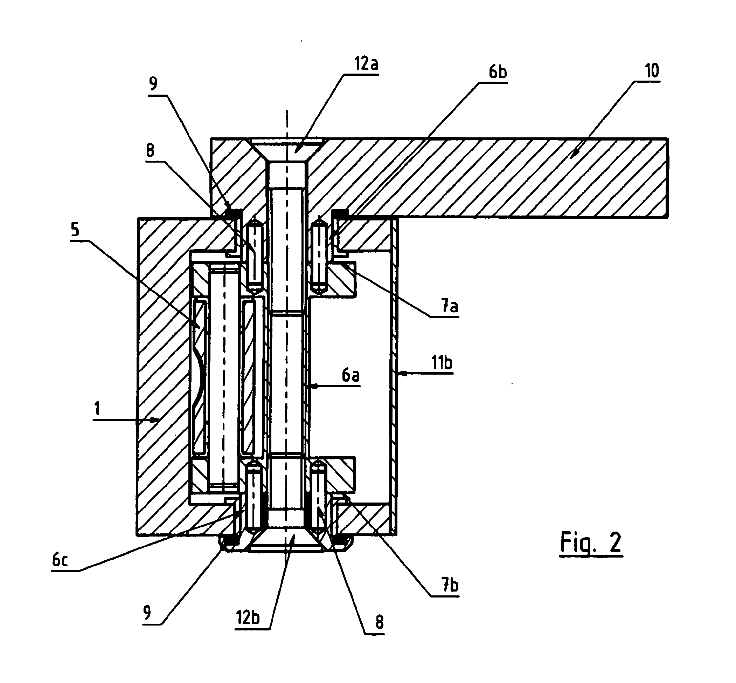

Gemäß Fig. 2 besteht die Antriebswelle (6) aus drei Teilen (6a, 6b, 6c) und besitzt eine Trag-Stütz-Lagerung der X-Anordnung. Der mittlere Teil der Antriebswelle, die Kurbel (6a), besitzt beidseitig zwei Flächen (7a, 7b), die als Axiallagerflächen der Trag-Stütz-Lagerung dienen. In der Mitte dieser Lagerflächen befinden sich beidseitig Bohrungen, die das Halslager (6b) des Greiferfingers und des Widerlagers (6c) mittels Stiften (8) aufnehmen, zentrieren und über diese Stifte oder mittels einer anderen Verzahnungsart das Drehmoment der Antriebswelle (6) auf den Greifefinger (10) übertragen. Die radiale Lagerung der Antriebswelle (6) im Greifergehäuse (1) ist einerseits als Halslager (6b) am Greiferfinger (10) und andererseits am separaten Widerlager (6c) angebracht. Somit lässt sich das vormontierte Getriebe, bestehend aus dem Schieber (4a), Koppeln (5) und Kurbeln (6a), durch die vordere Öffnung in das Greifergehäuse (1) einführen und mit der Kolbenstange der Betätigungseinheit (3) befestigen. Der Getrieberaum (2b) wird anschließend mit dem Deckel (11 b) abgedichtet und verschlossen. Nach dem Einsetzen des Greiferfingers (10) mit dem Axialdichtring (9) und dem am Greiferfinger (10) befindlichen Halslager (6b) von der einen Seite und des Widerlagers (6c) mit dem Axialdichtring (9) von der anderen Seite und deren axiale Befestigung mittels Schrauben (12a, 12b) durch die hohle Mitte ist die Antriebswelle (6) samt ihrer Lagerung komplett montiert. Die Trag-Stütz-Lagerung der Antriebswelle kann auch in O-Anordnung realisiert werden. In diesem Fall liegen die Axiallagerflächen am Halse des Greiferfingers (10) und des Widerlagers (6c) außerhalb des Gehäuses innerhalb der Axialdichtringe (9).

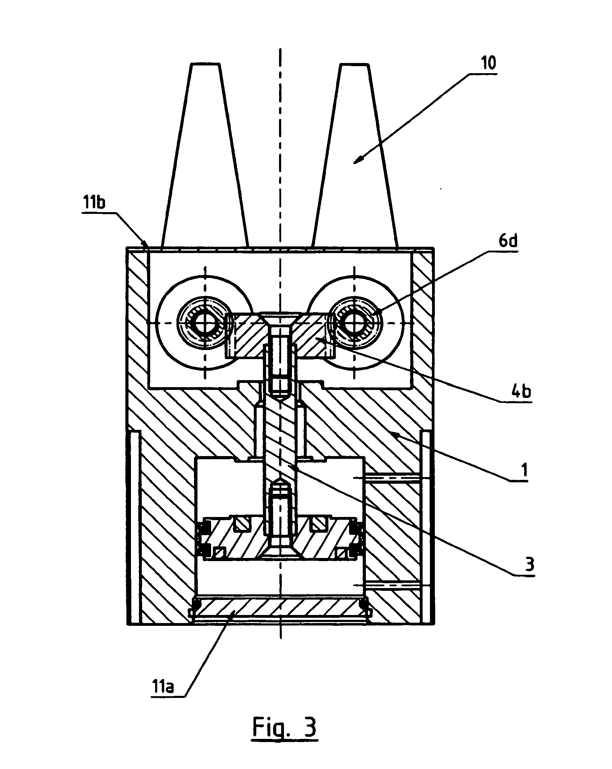

Gemäß Fig. 3 werden die Greiferfinger (10) jeweils durch eine zwei- oder dreiteilige verzahnte Antriebswelle (6d), eine Zahnradwelle, angetrieben. Am Ende der Kolben-Stangen-Einheit (3) befindet sich als Schieber eine Zahnstange (4b), die die verzahnte Antriebswelle (6d) und mit ihm den Greiferfinger (10) antreibt. Die Zahnstange (4b) und die verzahnte Antriebswelle (6d) können auch durch eine Schnecke und ein Schneckenrad ersetzt werden, um einen rotatorischen Antrieb z.B. durch einen Elektromotor zu realisieren. Auch hierbei ist die verzahnte Antriebswelle (6d) beidseitig axial und radial im Greifergehäuse (1) gelagert, wobei das Halslager (6b) sich als Bestandteil des Greiferfingers (10) an diesem und das Widerlager (6c) sich separat auf der gegenüber liegenden Seite des Greiferfingers befindet. Bei zweiteiliger Gestaltung der verzahnten Antriebswelle (6d) befindet sich der verzahnte Mittelteil entweder am Halslager (6b) oder am Widerlager (6c). Die Teilung der verzahnten Antriebswelle kann bei einer Geradverzahnung auch innerhalb des verzahnten Bereiches erfolgen, so dass die Verzahnung aus zwei Hälften zusammengesetzt wird, die axial miteinander verstiftet oder anderswie befestigt werden. Bei zweier Teilung der verzahnten Antriebswelle (6d) ist das Halslager (6b) und/oder das Widerlager (6c) im Durchmesser größer als der Kopfkreisdurchmesser der Verzahnung. In diesem Fall besteht der Getrieberaum (2b) ausschließlich aus Bohrungen für die verzahnte Stange der Antriebseinheit (3) sowie der Antriebswellen (6).

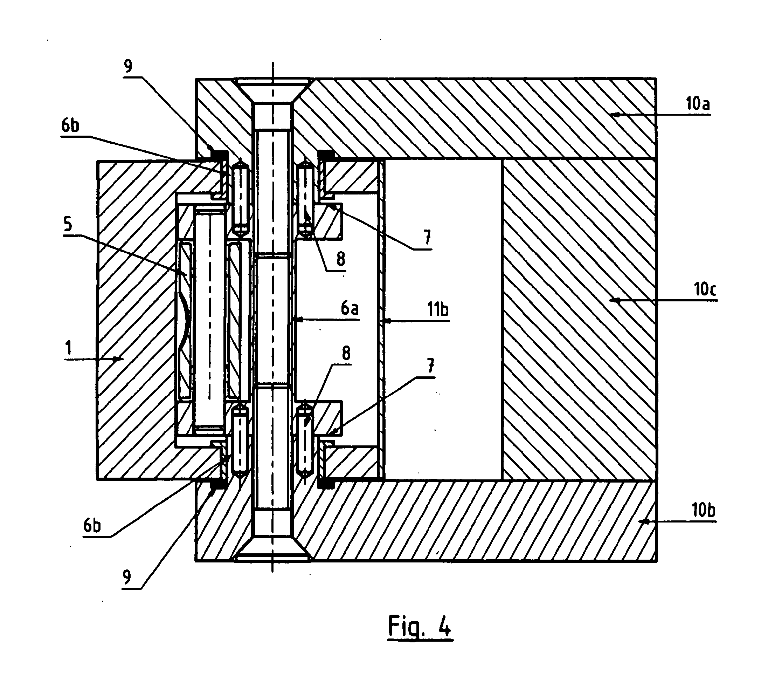

Gemäß Fig. 4 besteht der Greiferfinger aus zwei Hälften (10a, 10b), die beidseitig des Gehäuses angeordnet und außerhalb des Gehäusebereiches mit Hilfe des Backenträgers (10c) miteinander lösbar befestigt sind. Jede Greiferfingerhälfte (10a, 10b) beinhaltet einen Halslager (6b) der Antriebswelle, Kurbel- oder Zahnradwelle, einen Axialdichtring (9) und bei O-Anordnung auch eine Axiallagerfläche der Trag-Stütz-Lagerung. Der mittlere Teil (6a) der Antriebswelle bildet gemeinsam mit den Fingerteilen (10a, 10b) und dem Backenträger (10c) eine geschlossene, biege- und torsionssteife Einheit. Die Greiferfingerhälften (10a, 10b) lagern und zentrieren mit Hilfe ihrer integrierten Halslager (6b) und deren Stifte (8) oder axiale Verzahnung den mittleren Teil (6a) der Antriebswelle und bilden mit seinen Axiallagerflächen (7) und dem Backenträger (10c) einen vollständig geschlossenen, biege- und torsionssteifen Greiferfinger, der relativ zu seiner Antriebswelle, Kurbel- oder Zahnradwelle, im Rahmen der Teilung der Stifte (8) im Winkel verstellbar ist.

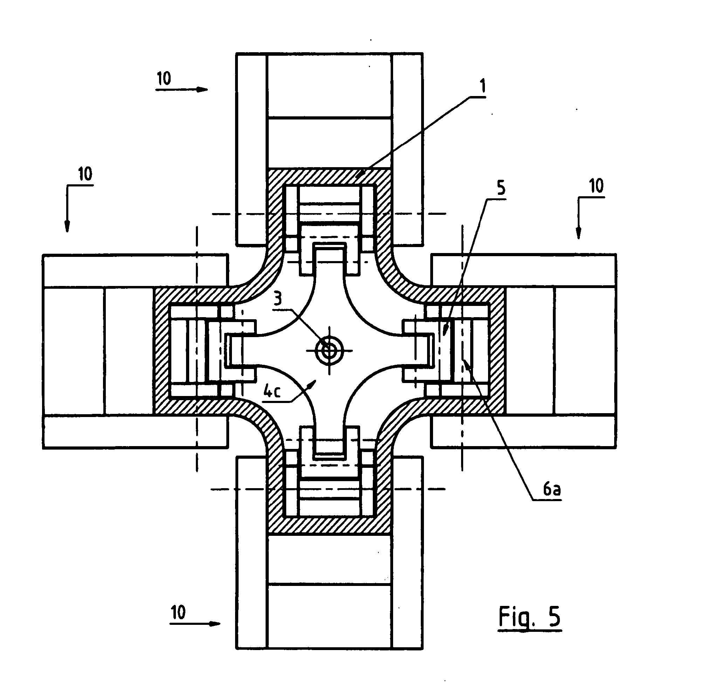

Gemäß Fig. 5 können mehrere Greifefinger (10) um die zentrale Betätigungseinheit (3) angeordnet und alle mit Hilfe eines einzigen zentral angeordneten Schiebers (4c) und einer Kurbel- oder Zahnradwelle pneumatisch, hydraulisch oder elektromotorisch synchron angetrieben werden.

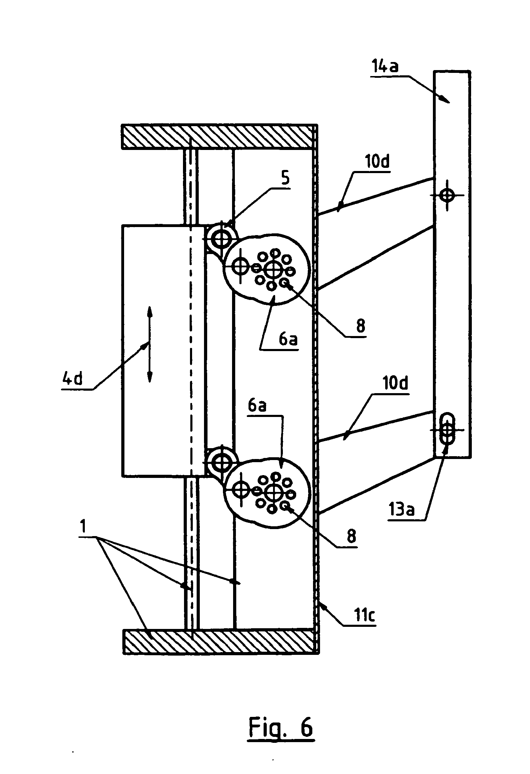

Gemäß Fig. 6 treiben zwei mehrteilig gestaltete Antriebswellen (6), hier als Kurbelwellen ausgeführt, je einen Lenker (10d) an, an deren Enden ein Greiferfinger (14a) gelenkig angeordnet ist. Während der eine Lenker durch ein Drehgelenk mit dem Greiferfinger verbunden ist, greift der zweite Lenker mit seinem Lagerbolzen in einer Kulisse (13a) des Greiferfingers (14a). Dadurch können die Lenker (10d) unterschiedlich lang sein oder die Kurbeln (6a) unterschiedlicher Drehwinkel durchführen, um dem Greiferfinger (14a) beim Öffnungs- oder Schließvorgang eine zusätzliche Rotation zu verleihen. Durch die Bahnform der Kulisse (13a) kann ebenfalls dem Greiferfinger eine zusätzliche Bewegung ermöglicht werden, und zwar jedem Greiferfinger eine andere Bewegung, wenn die Handhabungsaufgabe dies erfordert. Die Kulisse (13a) kann auch an einem der beiden Lenker (10d) angebracht werden, so dass der Greiferfinger (14a) nur noch zwei Drehgelenke aufweist. Bei paralleler und gleichlanger Anordnung der beiden Lenker (10d) kann auf die Kulisse am Greiferfinger (14a) oder am Lenker (10d) verzichtet werden. Bei Verzicht auf die Kulisse (13a) kann auch auf den externen Antrieb einer der beiden Lenker (10d) verzichtet werden, solange das so entstandene Gelenkviereck (1, 10d, 14a, 10d) nicht in seiner Deck- oder Strecklage gerät. Der mit zwei Lenkern (10d) angetriebene Greiferfinger (14a) kann sich auch in seiner Streck- bzw. Decklage mit den Lenkern (10d) eindeutig und sicher weiterbewegen und dabei Kräfte und Momente auf das Greifobjekt übertragen.

Die lineare Betätigungseinheit (4d) kann pneumatisch, hydraulisch oder elektromotorisch angetrieben werden. Sie treibt die Kurbeln (6a) der Antriebswellen (6) über die Koppelglieder (5) an und kann in zwei separaten Antrieben in Tandem- oder koaxiale Anordnung zerlegt und form-, kraft- oder reibschlüssig miteinander gekoppelten werden, um die beiden Lenker (10d) teils zusammen und teils getrennt voneinander anzutreiben. Der Deckel (11c) schließt den Getrieberaum hermetisch ab, so dass der gesamte Greifmechanismus komplett dicht ist.

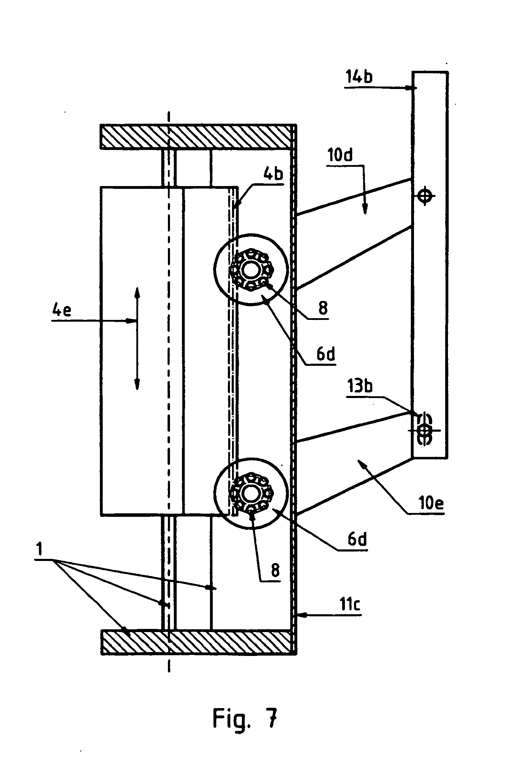

Gemäß Fig. 7 versetzt der linear angetriebene Schieber (4e) mit seiner Zahnstange (4b) zwei mehrteilig gestalteten und verzahnte Antriebswellen (6d) in Rotationsbewegung. Die Radiallager der verzahnten Antriebswellen (6d) sind als Halslager (6b) an den Lenkern (10d, 10e) angebracht und mit Hilfe von Bohrungen und Stiften (8) mit dem verzahnten Teil der Antriebswelle, im Winkel verstellbar, verbunden. Der Lenker (10d) greift mit seinem Ende drehgelenkig am Greiferfinger (14b) an. Der Lenker (10e) besitzt an seinem Ende eine Kulisse (13b), in die der Lagerbolzen des Greiferfingers (14b) eingreift. Die Kulisse (13b) kann durch ein binäres Glied, bestehend aus einem kleinen Lenker mit beidseitigem Drehgelenk, ersetzt werden, nicht dargestellt. Kinematisch verhält sich dieser Greifmechanismus ähnlich dem, der in der Figur 6 beschrieben wurde. Auf den Antrieb der zweiten Antriebswelle kann auch hier unter den gleichen Bedingungen verzichtet werden, wie bei der Figur 6 beschrieben.

Der Antrieb der zweiten Antriebswelle kann auch durch einen Zahnriemen oder eine Kette über die erste Antriebswelle erfolgen.

## Patentansprüche

1. Greifmechanismus für Maschinen, Roboter und Handhabungsgeräte mit wenigstens einem beweglichen Greiferfinger (10), der durch eine Antriebswelle (6) wie z.B. eine Kurbel-, Zahnrad-, Zahnriemen- oder Kettenradwelle betätigt wird, wobei die Antriebswelle mehrteilig gestaltet ist, **dadurch gekennzeichnet,**
**dass** die Zentrierung der Teile der Antriebswelle relativ zu einander sowie die Übertragung des Drehmomentes von einem Teil zum nächsten Teil reibschlüssig durch Kegelform oder formschlüssig durch axiale Verzahnung, vorzugsweise eine Triebstockverzahnung mittels Stifte (8) und Bohrungen, erfolgen.

2. Greifmechanismus nach Anspruch 1 **dadurch gekennzeichnet,**
**dass** ein Greifergehäuse (1) aus einem Stück mit zwei miteinander verbundenen Hohlräumen (2a, 2b) für die Aufnahme einer Betätigungseinheit (3) in dem einen Hohlraum (2a) und einer Getriebeeinheit im anderen Hohlraum (2b) besteht.

3. Greifmechanismus nach Anspruch 1 oder 2 **dadurch gekennzeichnet,**
**dass** eines der beiden Lager (6b, 6c) der Antriebswelle als Halslager (6b) fester Bestandteil des Greiferfingers oder des den Greiferfinger führenden Lenkers (10d, 10e) ist.

4. Greifmechanismus nach einem der Ansprüche 1 bis 3 **dadurch gekennzeichnet,**
**dass** an den inneren Stirnseiten des Greiferfingers (10a, 10b) oder eines Widerlagers (6c) der Antriebswelle oder eines den Greiferfinger führenden Lenkers (10d, 10e) Axiallagerflächen angebracht sind, die der axialen Trag-Stütz-Lagerung der Antriebswelle in O-Anordnung dienen.

5. Greifmechanismus nach Anspruch 1 bis 3 **dadurch gekennzeichnet,**
**dass** an den Stirnseiten des treibenden Mittelteils der Antriebswelle Axiallagerflächen (7) angebracht sind, die der axialen Trag-Stütz-Lagerung der Antriebswelle in X-Anordnung dienen.

6. Greifmechanismus nach einem der vorhergehenden Ansprüche **dadurch gekennzeichnet,**
**dass** der Greiferfinger als Koppel (14a, 14b) eines Führungsgetriebes geführt ist, das gleichzeitig durch zwei mehrteilig gestaltete Antriebswellen betätigt und auch durch die kritische Deck- und Strecklage eindeutig und sicher geführt wird.

7. Greifmechanismus nach einem der vorhergehenden Ansprüche **dadurch gekennzeichnet,**
**dass** mehrere Greiferfinger um eine zentrale Betätigungseinheit (3) angeordnet sind und durch diese synchron angetrieben werden.

## Claims

1. Gripper mechanism for machines, robots and handling equipment including at least one moving gripping finger (10), actuated by a drive shaft (6) such as crankshaft, gear shaft, toothed drive belt or chain wheel shaft, in which the drive shaft is composed of a plurality of sections, **characterized in that** the centering of the sections of the drive shaft in relation to one another as well as the transmission of torque from one section to the next section is performed by frictional connection by the use of cone-shape design or by form-locking design by the use of axial tooth intermeshing, preferably a stub tooth gear intermeshing by pins (8) and bores.

2. Gripper mechanism according to claim 1, **characterized in that** the gripper casing (1) consists of one integral piece comprising two interconnected cavities (2a, 2b) for the accommodation of the actuating unit (3) in one cavity (2a) and the transmission unit in the other cavity (2b).

3. Gripper mechanism according to claim 1 or 2, **characterized in that** one of the both bearings (6b, 6c) of drive shaft is designed as a neck bearing (6b) which is an integral part of the gripping finger or form a fixed component of the connecting bar guiding the gripping finger.

4. Gripper mechanism according to any one of claims 1 to 3, **characterized in that**
at the internal end faces of the gripping fingers (10a, 10b) or at the end face of the counter bearing (6c) or the connecting bar (10d, 10e) actuating the gripping finger, axial bearing surfaces are provided which serve as the axial journal bearing mounting of the drive shaft in O-configuration.

5. Gripper mechanism according to any one of claims 1 to 3, **characterized in that**
at the end faces of the driving central section axial bearing surfaces (7) are provided which serve for the axial journal bearing mounting of the drive shaft in X-configuration.

6. Gripper mechanism according to any one of the preceding claims, **characterized in that**
the gripping finger is controlled as a coupler (14a, 14b) of a guidance mechanism which is simultaneously actuated by two drive shafts of multiple-section design and is also controlled unambiguously and securely in critical final and extended position.

7. Gripper mechanism according to any one of claims 1 to 6, **characterized in that**
the plurality of gripping fingers is arranged about the central actuating unit (3) and driven synchronously by the latter.

## Revendications

1. Mécanisme de préhension pour machines, robots et appareils de manutention avec au moins un doigt préhenseur mobile (10), actionné par un arbre d'entraînement (6) tel qu'un vilebrequin, un arbre à pignons, à poulie dentée ou à poulie de chaîne, composé de plusieurs pièces, et **caractérisé par le fait que**
le centrage des pièces de l'arbre d'entraînement entre elles ainsi que la transmission du couple de rotation d'une pièce à l'autre sont assurés par frottement conique ou par liaison solidaire au moyen d'une denture axiale via tiges (8) et orifices.

2. Mécanisme de préhension selon la revendication 1, **caractérisé par le fait que** le préhenseur est doté d'un carter (1) en une pièce avec deux espaces creux reliés entre eux (2a, 2b) pour le logement d'une unité d'actionnement (3) dans l'un (2a) et d'une unité de transmission dans l'autre (2b).

3. Mécanisme de préhension selon la revendication 1 ou 2, **caractérisé par le fait que**
l'un des deux paliers (6b, 6c) de l'arbre d'entraînement forme, en tant que palier à collet (6b), partie intégrante du doigt préhenseur ou de la bielle d'entraînement du doigt préhenseur (10d, 10e).

4. Mécanisme de préhension selon l'une des revendications de 1 à 3, **caractérisé par le fait que**
les côtés frontaux intérieurs du doigt de préhension (10a, 10b), d'un palier de butée (6c) de l'arbre d'entraînement ou d'une bielle d'entraînement (10d, 10e) du doigt préhenseur soit dotés de surface axiales de palier, servant de palier de support axial de l'arbre d'entraînement à disposition en O.

5. Mécanisme de préhension selon les revendications 1 à 3, **caractérisé par le fait que**
les côtés frontaux de la pièce centrale d'entraînement de l'arbre d'entraînement sont dotés de surfaces axiales de palier (7) servant de palier de support axial de l'arbre d'entraînement à disposition en X.

6. Mécanisme de préhension selon l'une des revendications précédentes, **caractérisé par le fait que**
le doigt préhenseur est entraîné en liaison (14a, 14b) avec un dispositif de transmission de mouvement actionné parallèlement par deux arbres d'entraînement à plusieurs pièces et guidé de façon précise et sécurisée à travers la couche supérieure et étendue critique.

7. Mécanisme de préhension selon l'une des revendications précédentes, **caractérisé par le fait que**
plusieurs doigts préhenseurs sont positionnés autour d'une unité centrale d'actionnement (3) qui les entraîne de façon synchronisée.
